# EUROPÄISCHE PATENTSCHRIFT

(11) **EP 4 011 653 B1**
(45) Veröffentlichungstag und Bekanntmachung des Hinweises auf die Patenterteilung: **27.09.2023**
(21) Anmeldenummer: 21212180.0
(22) Anmeldetag: 03.12.2021
(51) Int. Cl.: B62D 55/205, B60C 27/20, B60C 27/06, B62D 55/04, B62D 55/27, B62D 55/28

(54) **PLATTENBAND MIT AUFGESCHOBENER FLOTATIONSPLATTE**
PLATE TAPE WITH SLIDE-ON FLOTATION PLATE
BANDE À PLAQUES COMPRENANT UNE PLAQUE DE FLOTTAISON GLISSÉE

(30) Priorität: 11.12.2020 DE 102020133201
(43) Veröffentlichungstag der Anmeldung: 15.06.2022
(73) Patentinhaber: RUD Ketten Rieger & Dietz GmbH u. Co. KG, 73432 Aalen (DE)
(72) Erfinder: Rieger, Johannes, 73447 Oberkochen (DE); Tafner, Daniel, 8054 Graz (AT)
(74) Vertreter: Grünecker Patent- und Rechtsanwälte PartG mbB

(56) Entgegenhaltungen:
- WO-A1-2019/016431
- WO-A1-2019/162558
- WO-A1-2020/043954
- FR-A- 345 201

## Beschreibung

Die Erfindung betrifft ein Plattenband, insbesondere zur Auflage auf einer Reifenlauffläche, für einen oder mehrere Fahrzeugreifen, wobei das Plattenband zwei seitliche Führungsketten aufweist, die in einem an dem oder den Fahrzeugreifen montierten Zustand an sich in einer axialen Richtung gegenüberliegenden Reifenschultern anliegen, wobei jede Führungskette wenigstens ein Verbindungsglied aufweist und sich ein Paar von Verbindungsgliedern, von denen jedes Verbindungsglied Teil einer der Führungsketten ist, axial gegenüberliegt und mit wenigstens einer austauschbaren Flotationsplatte, die sich im montierten Zustand in der axialen Richtung von dem einen zu dem anderen Verbindungsglied erstreckt.

Die Erfindung betrifft darüber hinaus ein Verbindungsglied und eine Flotationsplatte, jeweils für ein Plattenband, das im Sinne der Erfindung ausgestaltet ist. Die Erfindung betrifft zudem einen Bausatz für ein Plattenband im Sinne der Erfindung, das eine Mehrzahl von Verbindungsgliedern und eine Mehrzahl von Flotationsplatten umfasst.

Plattenbänder dienen zum Beispiel bei Forstfahrzeugen zum Schutz der Reifen, zur Traktionsverbesserung und zum Bodenschutz. Insbesondere bei feuchten oder sumpfigen Untergründen muss das Einsinken eines Fahrzeugreifens im Boden verhindert werden. Zu diesem Zweck weisen Plattenbänder Flotationsplatten auf, die beim Bodenkontakt das Einsinken des Fahrzeugreifens verhindern können. Derartige Plattenbänder sind beispielsweise aus der WO 2019/162558 A1 und der WO 2019/016431 A1 bekannt. Ebenso sind Plattenbänder aus den Druckschriften WO 2020/043 954 A1 und FR 345 201 A bekannt, deren Flotationsplatten mit hakenförmigen Enden an Kettenglieder gehängt werden. Zur Montage wird zunächst ein erstes Ende einer Flotationsplatte an ein Kettenglied gehängt und dann das zweite Ende der Flotationsplatte zu einem anderen Kettenglied eines Paares gekippt.

Da Flotationsplatten häufig nur bei Bedarf am Plattenband befestigt werden, ist es erforderlich, dass diese schnell und einfach am Einsatzort zu montieren sind. Es ist auch wünschenswert, eine beschädigte Flotationsplatte bei Bedarf schnell und einfach austauschen zu können.

Es ist daher die Aufgabe der Erfindung, ein Plattenband der eingangs genannten Art bereitzustellen, dessen wenigstens eine Flotationsplatte sich einfach am übrigen Plattenband montieren lässt.

Die erfindungsgemäße Aufgabe ist für ein Plattenband der oben genannten Art dadurch gelöst, dass die wenigstens eine Flotationsplatte auf die Verbindungsglieder des Paares geschoben ist, wobei die Flotationsplatte von wenigstens einem Verbindungsglied des Paares in der axialen Richtung geführt und an wenigstens einem Verbindungsglied des Paares gegen Verschieben sicherbar ist.

Das erfindungsgemäße Plattenband erlaubt die Montage der Flotationsplatten durch Verschieben in der axialen Richtung. Durch diese Verschiebung in nur einer Richtung ist eine einfache Montage möglich. Dadurch, dass die Flotationsplatte durch wenigstens eines der Verbindungsglieder geführt ist, wird die Montage zusätzlich erleichtert. Die durch wenigstens eines der Verbindungsglieder mögliche Sicherung gegen Verschieben kann die Lage der Flotationsplatte in Bezug auf die Führungsketten festlegen.

Die axiale Richtung des Plattenbandes erstreckt sich senkrecht zu einer durch eine Umfangsrichtung des Plattenbandes aufgespannten Ebene. Die axiale Richtung ist parallel oder identisch mit den Achsen eines oder mehrerer Fahrzeugreifen, an dem oder an denen das Plattenband im montierten Zustand angebracht ist. Die Flotationsplatte hat in der Regel eine längliche Form, welche durch einen länglichen Körper vorgegeben sein kann, wobei sich die längliche Form parallel zu der axialen Richtung erstreckt.

Vorzugsweise weist das Plattenband eine Mehrzahl von Flotationsplatten auf, welche an in Umfangsrichtung des Plattenbandes aufeinanderfolgenden Paaren von Verbindungsgliedern angebracht sind. Das Plattenband weist bevorzugt auch eine Mehrzahl von Traktionsstegen auf, die sich ebenfalls entlang der axialen Richtung erstrecken und auf der Reifenlauffläche aufliegen können, wobei die Traktionsstege jeweils durch die Verbindungsglieder miteinander verbunden sind. Bei einem Plattenband mit Traktionsstegen und Flotationsplatten können sich entlang der Umfangsrichtung des Plattenbandes Traktionsstege mit Flotationsplatten abwechseln.

Weist das Plattenband Traktionsstege auf, so sind die Traktionsstege und die Flotationsplatten vorzugsweise so geformt und in Bezug auf einander angebracht, dass das Fahren, insbesondere im Gelände, auf den Flotationsplatten und den Traktionsstegen gleichermaßen erfolgt. Zusätzlich sollten die auf einem Traktionssteg angebrachten Stollen, sofern vorhanden, über den Traktionssteg und die benachbarten Flotationsplatten hinausragen. Die Stollen sorgen im Gelände für Traktion sowie für Sicherheit gegen seitliches Verrutschen.

Bei einer weiteren Ausführung können die Flotationsplatten so ausgeformt sein, dass sie über die Traktionsstege und auch über dessen Stollen hinausragen. Dadurch kann ein mit solchen Flotationsplatten versehenes Fahrzeug auf einer befestigten Straße bewegt werden, ohne mit den Traktionsstegen und dessen Stollen die Fahrbahn zu berühren.

Zum Schutz der befestigten Straße können diese Flotationsplatten aus entsprechend schonendem Material, zum Beispiel Kunstsoff, oder mit Geometrien ausgeformt sein, die das Risiko einer Beschädigung der Straße vermeiden oder zumindest verringern.

Die erfindungsgemäße Lösung kann durch verschiedene, jeweils für sich vorteilhafte und beliebig miteinander kombinierbare Ausgestaltungen weiter verbessert werden. Auf diese Ausführungsformen und die mit ihnen verbundenen Vorteile ist im Folgenden eingegangen.

Gemäß einer ersten vorteilhaften Ausgestaltung ist die Flotationsplatte in einer radialen Richtung und in einer Umfangsrichtung des Plattenbandes, insbesondere im montierten Zustand, fixiert, und parallel zu der axialen Richtung verschieblich an den zwei Verbindungsgliedern eines Paares gehalten. Bei der Montage kann die Flotationsplatte in der axialen Richtung noch verschieblich sein. Bereits bei der Montage durch Verschieben kann die Flotationsplatte derart von wenigstens einem der Verbindungsglieder gehalten sein, dass eine Bewegung in einer radialen Richtung und in der Umfangsrichtung verhindert ist. Bevorzugt ist die Flotationsplatte bei der Montage von beiden Verbindungsgliedern in der axialen Richtung geführt. Insbesondere kann die Flotationsplatte gegen ein Verkippen gesichert sein.

Um eine endgültige Lage für die Flotationsplatte festzulegen, kann diese wenigstens einen Anschlag zur Anlage an wenigstens einem Verbindungsglied des mit der Flotationsplatte verbundenen Paares von Verbindungsgliedern aufweisen, wobei die Flotationsplatte durch den Anschlag gegen Verschieben in einer Richtung parallel zur axialen Richtung gesichert ist.

Die Flotationsplatte kann dazu wenigstens einen Haken aufweisen, der das wenigstens eine Verbindungsglied im montierten Zustand zumindest abschnittsweise umgreift, wobei der Anschlag Teil, insbesondere ein Grund, des Hakens ist. Der Haken, der das Verbindungsglied umgreift, kann die Flotationsplatte nicht nur gegen Verschieben, sondern auch gegen eine Bewegung in der radialen Richtung sichern.

Um die Flotationsplatte in ihrer endgültigen Position sicher zu halten und um ein unbeabsichtigtes Ablösen im Betrieb zu verhindern, kann wenigstens ein Lagesicherungselement vorgesehen sein, das zur Sicherung der relativen Lage der Flotationsplatte in Bezug auf die axiale Richtung am Verbindungsglied ausgestaltet ist. Das Lagesicherungselement kann beispielsweise ein Bolzen sein oder eine Schraube. Zur Verbindung können Bohrungen in der Flotationsplatte und im Verbindungsglied vorgesehen sein.

Die Flotationsplatte kann im montierten Zustand in wenigstens ein, vorzugsweise beide, Verbindungsglieder des wenigstens einen Paares, zumindest abschnittsweise, eingeschoben sein. Die Flotationsplatte kann also mit zumindest einem Abschnitt in wenigstens eines der Verbindungsglieder hineinragen. Hierdurch kann sie sicher mit dem wenigstens einen Verbindungsglied verbunden sein.

Zur sicheren Halterung der Flotationsplatte und zur sicheren Führung beim Verschieben kann das wenigstens eine Verbindungsglied wenigstens eine Nutstruktur aufweisen, in die wenigstens ein Abschnitt der Flotationsplatte, insbesondere in der axialen Richtung, eingeschoben ist. Durch die Nutstruktur kann die Verschieberichtung festgelegt und die Flotationsplatte sicher geführt sein. Alternativ dazu kann die Nutstruktur auch an der wenigstens einen Flotationsplatte angeordnet sein, so dass ein Abschnitt des Verbindungsgliedes in die Flotationsplatte eingeschoben werden kann.

Die Nutstruktur ist vorzugsweise schienenförmig ausgestaltet, wobei ein komplementär zur Nutstruktur geformter Abschnitt der Flotationsplatte in diese eingeschoben ist. Vorzugsweise erstreckt sich die Schienenform parallel zur axialen Richtung. Der Abschnitt der Flotationsplatte, der in die schienenförmige Nutstruktur eingeschoben ist, ist bevorzugt ebenfalls schienenförmig ausgestaltet, insbesondere komplementär zur schienenförmigen Nutstruktur des Verbindungsgliedes. Wie oben bereits erwähnt, kann die Nutstruktur auch Teil der Flotationsplatte sein, so dass ein Abschnitt des Verbindungsglieds in die schienenförmige Nutstruktur eingeschoben ist.

Um das Einsetzen der Flotationsplatte in die Nutstruktur am wenigstens einen Verbindungsglied zu erleichtern, ist die Nutstruktur bevorzugt zumindest abschnittsweise in einer radialen Richtung nach außen hin geöffnet. Ein Abschnitt der Flotationsplatte kann zur Montage erst von außen in der radialen Richtung in die Nutstruktur eingesetzt und dann entlang der axialen Richtung in diese eingeschoben werden.

Um den in die Nutstruktur eingeschobenen Abschnitt der Flotationsplatte im montierten Zustand wenigstens in der radialen Richtung sicher zu halten, ist die Nutstruktur bevorzugt zumindest abschnittsweise in der radialen Richtung hinterschnitten. Durch den Hinterschnitt ist eine formschlüssige Halterung der Flotationsplatte in der radialen Richtung möglich. Der Hinterschnitt kann im Querschnitt beispielsweise die Form eines Trapezes oder eines Schwalbenschwanzes haben. Alternativ sind auch anders geformte Profile für die Nutstruktur möglich.

Die Nutstruktur hat bevorzugt einen in einer radialen Richtung hinterschnittenen Halteabschnitt und einen in axialer Richtung mit dem Halteabschnitt fluchtenden, nicht hinterschnittenen Einsetzabschnitt zum Einsetzen wenigstens eines Abschnitts der Flotationsplatte.

Zur Montage kann die Flotationsplatte zunächst in den Einsetzabschnitt eingesetzt werden, wobei das Einsetzen durch den fehlenden Hinterschnitt möglich ist. Die Flotationsplatte wird dabei bevorzugt entlang der radialen Richtung eingesetzt. Anschließend wird die Flotationsplatte in axialer Richtung verschoben, so dass diese in den in radialer Richtung hinterschnittenen Halteabschnitt gelangt.

Die wenigstens eine Flotationsplatte weist bevorzugt wenigstens einen in einer radialen Richtung nach innen vorspringenden und sich bevorzugt in axialer Richtung erstreckenden Vorsprung zum Einschieben in das wenigstens eine Verbindungsglied auf. Der Vorsprung ist vorzugsweise komplementär zu einem Hinterschnitt der Nutstruktur geformt, sofern eine solche Nutstruktur am Verbindungsglied vorhanden ist.

Vorzugsweise weisen die Verbindungsglieder die oben genannten Nutstrukturen, insbesondere hinterschnittene Nutstrukturen, und die Flotationsplatten komplementär zu den Nutstrukturen geformte Vorsprünge auf. Die Erfindung ist jedoch nicht hierauf beschränkt. Weisen die Verbindungsglieder keine hinterschnittenen Nutstrukturen auf, ist die Sicherung der radialen Position der Flotationsplatten in Bezug auf die Verbindungsglieder auch durch geeignete Lagesicherungselemente möglich. So können für jedes Verbindungsglied wenigstens ein Bolzen oder eine Schraube vorgesehen sein, welche sich durch sowohl eine Flotationsplatte als auch einen Teil des Verbindungsgliedes erstrecken.

Gemäß einer weiteren vorteilhaften Ausgestaltung kann die wenigstens eine Flotationsplatte aus einem Kunststoff hergestellt sein. Insbesondere kann wenigstens eine Flotationsplatte des Plattenbandes als ein Spritzgussteil gebildet sein. Hierbei bietet es sich an, wenn der wenigstens eine Haken und/oder der wenigstens eine Vorsprung der Flotationsplatte einstückig mit einem Körper der Flotationsplatte gebildet ist.

Alternativ zur Fertigung aus Kunststoff, kann die wenigstens eine Flotationsplatte des Plattenbandes aus Metall hergestellt sein. Eine weitere Alternative ist ein Verbundmaterial, insbesondere ein Faserverbundmaterial.

Gemäß einer weiteren Ausführungsform kann die wenigstens eine Flotationsplatte aus einer Kombination aus Metall- und Kunststoffteilen bestehen gefertigt sein. Dazu kann beispielsweise der Körper der Flotationsplatte aus Kunststoff und die zur Verbindung mit den Verbindungsgliedern vorgesehenen Vorsprünge aus einem Metall, insbesondere Stahl, gefertigt sein. Zur Herstellung können die Metallteile in eine Form eingelegt und teilweise mit Kunststoff umgossen werden, um daraus den Körper zu formen und gleichzeitig mit den Vorsprüngen aus Metall zu verbinden.

Im Folgenden ist die Erfindung beispielhaft anhand vorteilhafter Ausführungsformen mit Bezug auf die Zeichnungen näher erläutert. Die bei der Ausführungsform beispielhaft dargestellte Merkmalskombination kann nach Maßgabe der obigen Ausführungen entsprechend den für einen bestimmten Anwendungsfall notwendigen Eigenschaften des erfindungsgemäßen Plattenbandes durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1: eine perspektivische Darstellung eines Teils eines erfindungsgemäßen Plattenbandes;
- Fig. 2: eine perspektivische Darstellung einer Flotationsplatte für das Plattenband der Fig. 1;
- Fig. 3: eine Detailansicht der Flotationsplatte aus Fig. 2;
- Fig. 4: eine weitere Detailansicht der Flotationsplatte aus Fig. 2;
- Fig. 5: eine perspektivische Darstellung eines Verbindungsgliedes für das Plattenband aus Fig. 1;
- Fig. 6: eine andere perspektivische Darstellung des Verbindungsgliedes aus Fig. 5;
- Fig. 7: eine perspektivische Detailansicht einiger mit einem Verbindungsglied verbundenen Flotationsplatte des Plattenbandes aus Fig. 1;
- Fig. 8: eine weitere perspektivische Detailansicht einiger mit einem Verbindungsglied verbundenen Flotationsplatte des Plattenbandes aus Fig. 1;
- Fig. 9: eine freigeschnittene Ansicht der Darstellung der Fig. 8;
- Fig. 10: beispielhaft das Einschieben einer Flotationsplatte in die Verbindungsglieder; und
- Fig. 11: bis Fig. 16 weitere Varianten der Verbindungsglieder und Flotationsplatten.

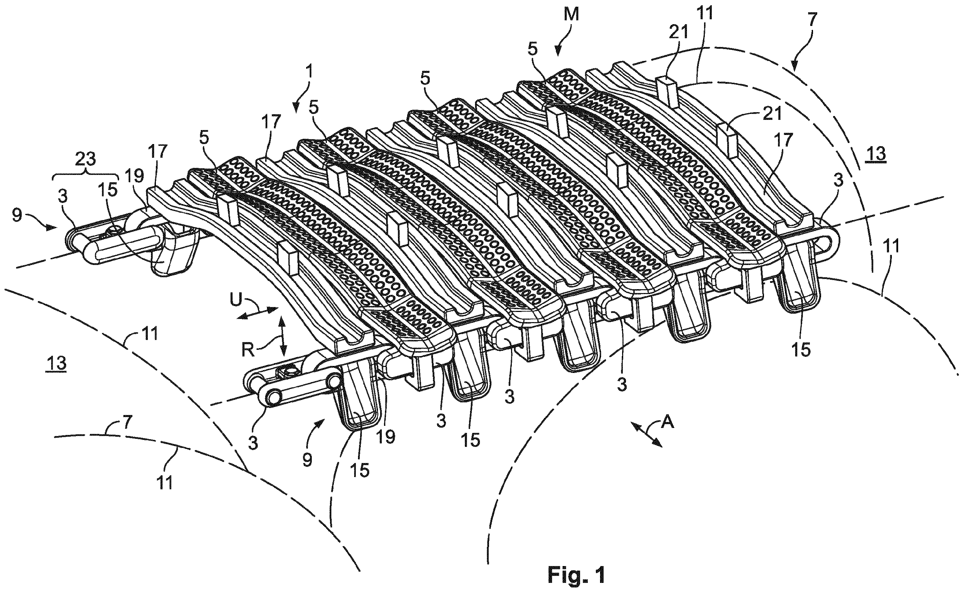

Im Folgenden ist ein erfindungsgemäßes Plattenband 1 mit Bezug auf die Fig. 1 beschrieben. Anschließend wird auf die einzelnen Komponenten des Plattenbandes 1, insbesondere auf die Verbindungsglieder 3 und die Flotationsplatten 5, mit Bezug auf die Figuren 1 bis 9 eingegangen.

Das Plattenband 1 dient zur Verwendung mit einem oder mehreren Fahrzeugreifen 7, welche in Fig. 1 lediglich gestrichelt angedeutet sind. Das Plattenband 1 kann insbesondere für Fahrzeuge mit sogenannten Bogieachsen verwendet werden, wobei es an zwei aufeinanderfolgenden Fahrzeugreifen montiert werden kann. Dies ist in Fig. 1 angedeutet. Alternativ dazu kann das Plattenband 1 auch an einem Einzelreifen montiert werden. Das Plattenband 1 wird im Folgenden beispielhaft als mit zwei Fahrzeugreifen 7 verbunden beschrieben.

Fig. 1 zeigt der besseren Sichtbarkeit halber lediglich einen Teil des Plattenbandes 1. In einem an den Fahrzeugreifen 7 montierten Zustand M ist das Plattenband 1 vollständig um die Fahrzeugreifen 7 umlaufend angeordnet und in sich geschlossen. Das Plattenband 1 erstreckt sich dabei entlang einer Umfangsrichtung U um die Fahrzeugreifen 7.

Das Plattenband 1 weist seitliche Führungsketten 9 auf, die im am Fahrzeugreifen montierten Zustand M an den Reifenschultern 11 der Fahrzeugreifen 7 anliegen und das Plattenband 1 gegen seitliches verrutschen sichern. So kann gewährleistet sein, dass das Plattenband 1 auf den Laufflächen 13 der Fahrzeugreifen 7 bleibt.

Die seitlichen Führungsketten 9 können zur Sicherung des Plattenbandes 1 an den Fahrzeugreifen 7 radiale Vorsprünge 15 aufweisen. Vorzugsweise liegen sich je zwei Vorsprünge 15 in einer axialen Richtung A gegenüber und erstrecken sich in einer radialen Richtung R nach innen.

Die axiale Richtung A verläuft bevorzugt parallel zu Achsrichtungen der Fahrzeugreifen 7. Die radiale Richtung R erstreckt sich senkrecht zur axialen Richtung A. Die Umfangsrichtung U ist die Richtung, entlang der sich das Plattenband 1 um die Fahrzeugreifen 7 herum erstreckt.

Vorzugsweise weist das Plattenband 1 Traktionsstege 17 auf, die in Umfangsrichtung U voneinander beabstandet und aufeinanderfolgend angeordnet sind. Die Traktionsstege 17 können mit Kettengliedern 19 verbunden sein, von denen sich die radialen Vorsprünge 15 erstrecken.

Die Traktionsstege 17 erstrecken sich von der einen Führungskette 9 zur anderen Führungskette 9 entlang der axialen Richtung A. Die Traktionsstege 17 weisen bevorzugt Stollen 21 zur Traktionsverbesserung auf. Die Traktionsstege 17 sind durch die Verbindungsglieder 3 miteinander verbunden. Vorzugsweise verbindet jedes Verbindungsglied 3 zwei in Umfangsrichtung U aufeinanderfolgende Traktionsstege 17 miteinander.

Die Verbindungsglieder 3 sind derart angeordnet, dass sich jeweils ein Paar 23 von Verbindungsgliedern 3 in der axialen Richtung A gegenüberliegt. Je eine Flotationsplatte 5 erstreckt sich von einem Verbindungsglied 3 eines Paares 23 zum anderen Verbindungsglied 3 eines Paares 23. Dadurch sind die Flotationsplatten 5, in Umfangsrichtung U gesehen, jeweils zwischen zwei aufeinanderfolgenden Traktionsstegen 17 angeordnet.

Bevorzugt ist jedes Paar 23 von Verbindungsgliedern 3 mit einer Flotationsplatte 5 versehen. In Umfangsrichtung U wechselt sich dann über das gesamte Plattenband 1 ein Traktionssteg 17 mit einer Flotationsplatte 5 ab. Dies ist jedoch nicht zwingend. Am Plattenband 1 können auch Stellen ohne Flotationsplatten 5 oder ohne Traktionsstege 17 vorgesehen sein.

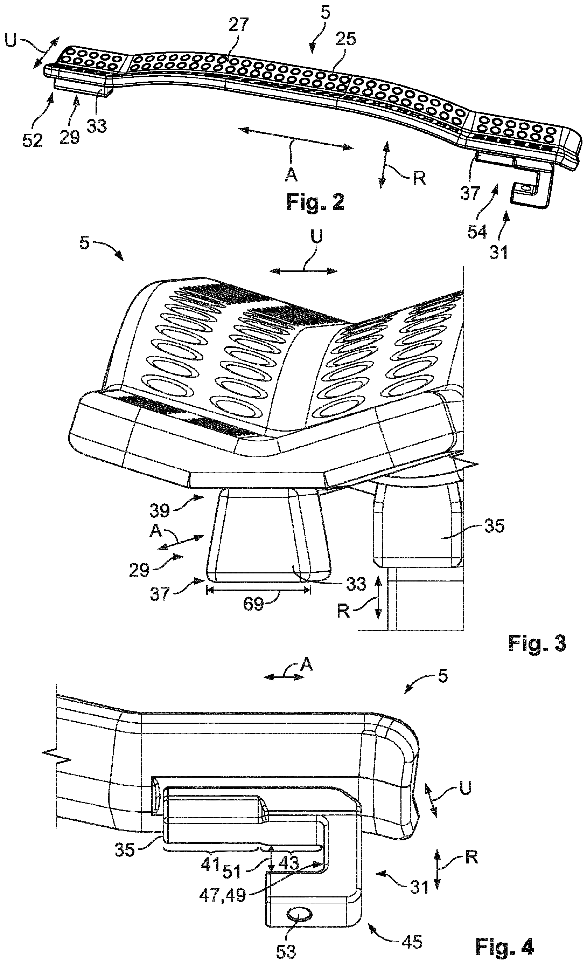

Eine einzelne Flotationsplatte 5 ist in Fig. 2 dargestellt. Diese ist im Folgenden mit Bezug auf die Figuren 1 und 2 und auch auf die Figuren 3 und 4, welche Details der Flotationsplatte 5 zeigen, näher beschrieben.

Die Flotationsplatte 5 erstreckt sich länglich entlang der axialen Richtung A. Insbesondere erstreckt sich ein Körper 25 der Flotationsplatte 5 entlang der axialen Richtung A. Der Körper 25 weist eine Oberfläche 27 auf, welche mit einem Untergrund in Kontakt treten kann, wenn die Flotationsplatte 5 zwischen einem der Fahrzeugreifen 7 und dem Untergrund angeordnet ist.

Die Flotationsplatte 5, bzw. deren Körper 27 weist eine gewölbte Form auf, wobei sich die Wölbung in radialer Richtung nach außen erstreckt. Mit anderen Worten springt die Flotationsplatte 5 mit einem Mittenbereich nach außen vor. Im montierten Zustand M springt der Mittenbereich jedoch radial nach außen nicht weiter vor als sich die Stollen 21 der Traktionsstege 17 erstrecken. Der Körper 25 der Flotationsplatte 5 weist insgesamt einen V-förmigen Querschnitt quer zur axialen Richtung A auf.

Sowohl die gewölbte Form, als auch der V-förmige Querschnitt sind lediglich Beispiele für die Ausgestaltung einer Flotationsplatte 5. So kann der Körper 25 der Flotationsplatte 5 beispielsweise auch eine durchgängig gerade Form aufweisen. Der Querschnitt der Flotationsplatte 5 kann alternativ beispielsweise U-förmig oder gerade sein.

Vorzugsweise ist die Flotationsplatte 5 an ihren sich in axialer Richtung A gegenüberliegenden Enden 29 und 31 nicht gewölbt. Die Flotationsplatte 5 weist ein erstes Ende 29 und ein zweites Ende 31 auf.

In der beispielhaft dargestellten Ausführungsform sind die Enden 29 und 31 unterschiedlich gebildet. Das erste Ende 29 ist im montierten Zustand M bevorzugt näher zum Fahrzeug hin und das zweite Ende 31 weiter vom Fahrzeug weg angeordnet, sodass letzteres von außen zugänglich ist. Eine Anordnung, bei der das erste Ende 29 von außen zugänglich ist und das zweite Ende 31 zum Fahrzeug hin weisend angeordnet ist, ist jedoch nicht ausgeschlossen.

Das erste Ende 29 ist in Fig. 3 und das zweite Ende 31 in Fig. 4 vergrößert dargestellt. Beide Enden weisen Vorsprünge 35 auf, welche radial nach unten, also im montierten Zustand M in Richtung der Fahrzeugreifen 7, vorspringen. Beide Vorsprünge 33 und 35 sind zumindest abschnittsweise schienenförmig entlang der axialen Richtung A geformt.

Der Vorsprung 33 des ersten Endes 29 weist einen trapezförmigen Querschnitt auf. Dabei ist das von der übrigen Flotationsplatte 5 weg weisende Ende 37 breiter als das näher an der übrigen Flotationsplatte 5 liegende Ende 39 des Vorsprungs 33. Entlang der axialen Richtung A ist der Querschnitt des Vorsprungs 33 konstant. Der trapezförmige Querschnitt dient zur formschlüssigen Verbindung mit einem komplementär geformten Teil eines Verbindungsgliedes 3. Hierauf ist weiter unten eingegangen.

Der schienenförmige Vorsprung 33 des ersten Endes 29 fluchtet in der axialen Richtung mit dem Vorsprung 35 des zweiten Endes 31. Der Vorsprung 35 des zweiten Endes 31 weist einen Einsetzabschnitt 41 und einen trapezförmigen Verbindungsabschnitt 43 auf.

Der Einsetzabschnitt 41 und der Verbindungsabschnitt 43 des Vorsprungs 35 sind schienenförmig und erstrecken sich in axialer Richtung A.

Der Einsetzabschnitt 41 weist bevorzugt einen quadratischen oder rechteckigen Querschnitt auf. Der Querschnitt des Einsetzabschnitts 41 ist dabei so bemessen, dass der Einsetzabschnitt 41 entlang der radialen Richtung R in eine hinterschnittene Öffnung (hier noch nicht dargestellt) eines Verbindungsgliedes 3 eingesetzt werden kann. Der Verbindungsabschnitt 43 ist dagegen bevorzugt mit gleichem Querschnitt wie der Vorsprung 33 des ersten Endes 29 gebildet.

Der Verbindungsabschnitt 43 geht direkt in einen Haken 45 über, welcher sich zunächst in radialer Richtung von der Flotationsplatte 5 weg erstreckt und dann in Richtung zum ersten Ende 29 hin ragend umgebogen ist.

Der Haken 45 kann zum Sichern der Flotationsplatte 5 an einem Verbindungsglied 3 dienen. Hierauf ist später eingegangen. Ein Grund 47 des Hakens 45 kann einen Anschlag 49 zur Anlage an einem Verbindungsglied 3 bilden. Der Haken 45 weist eine Weite 51 auf, die entlang der axialen Richtung A konstant ist.

Dadurch kann der Haken 45 entlang der axialen Richtung A auf ein Verbindungsglied 3 aufgeschoben werden. Der Haken weist eine Bohrung 53 auf, in die ein Lagesicherungselement (nicht dargestellt) eingesetzt und mit einem im Haken 45 befindlichen Verbindungsglied 3 verbunden werden kann. Vorzugsweise erstreckt sich die Bohrung 53 entlang der radialen Richtung R durch den Haken 45 im Bereich seiner Spitze.

Die Vorsprünge 33 und 35 bilden jeweils einen Abschnitt 52 bzw. 54, der im montierten Zustand M in ein Verbindungsglied 3 eingeschoben ist.

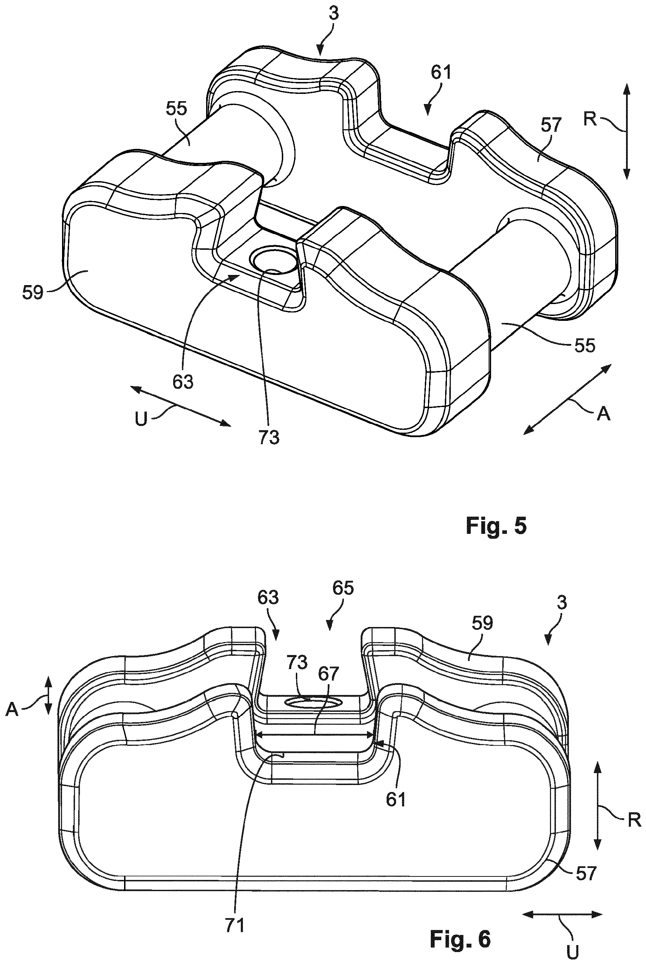

Im Folgenden ist auf ein Verbindungsglied 3 mit Bezug auf die Figuren 5 und 6 eingegangen. Zur Beschreibung des Verbindungsgliedes 3 wird, wie auch bei der Beschreibung der Flotationsplatte 5, auf die Richtungen zurückgegriffen, welche das Verbindungglied 3 im montierten Zustand M das Verbindungsglied 3 einnimmt.

Das Verbindungsglied 3 weist zwei sich in Umfangsrichtung U gegenüberliegende und jeweils in axialer Richtung A erstreckende Verbindungsbolzen 55 auf. Mit den Verbindungsbolzen 55 können Kettenglieder 19 der seitlichen Führungskette verbunden werden.

Darüber hinaus weist das Verbindungsglied 3 zwei Stege 57 und 59 auf, welche sich entlang der Umfangsrichtung U erstrecken und sich in axialer Richtung A gegenüberliegen. Die beiden Stege 57 und 59 verbinden die beiden Verbindungsbolzen 55 miteinander.

Der Steg 57 weist eine erste Öffnung 61 und der Steg 59 weist eine zweite Öffnung 63 auf. Beide Öffnungen 61 und 63 erstrecken sich entlang der radialen Richtung R in den jeweiligen Steg hinein und fluchten in axialer Richtung A miteinander. Die Öffnungen 61 und 63 bilden zusammen eine Nutstruktur 65 zur Aufnahme eines Teils einer Flotationsplatte 5.

Die erste Öffnung 61 ist in radialer Richtung R nach außen hin geweitet, um die Verbindung mit der Flotationsplatte 5 zu erleichtern. Die erste Öffnung 61 stellt einen Einsetzabschnitt der Nutstruktur 65 dar.

Alternativ dazu kann die erste Öffnung 61 auch einen konstanten Querschnitt aufweisen. Die lichte Weite 67 der ersten Öffnung 61 ist vorzugsweise wenigstens so groß wie die Breite 69 der Vorsprünge 33 und 35 im Bereich des breiten Endes 39 des trapezförmigen Querschnitts.

Bei der Verbindung einer Flotationsplatte 5 mit einem Verbindungsglied 3 kann zumindest der Vorsprung 33 der Flotationsplatte 5 zunächst auf den Grund 71 der ersten Öffnung 61 aufgelegt werden. Danach kann die Flotationsplatte 5 in axialer Richtung verschoben werden, wobei der Vorsprung 33 in die zweite Öffnung 63 geschoben wird.

Die zweite Öffnung 63 weist, in radialer Richtung R gesehen, einen Hinterschnitt auf, sodass die Öffnung 63 im Wesentlichen komplementär zu den trapezförmigen Querschnitten der Vorsprünge 33 und 35 geformt ist. Wenn ein Vorsprung 33 oder 35 mit seinem trapezförmigen Abschnitt in der hinterschnittenen zweiten Öffnung 63 angeordnet ist, ist eine formschlüssige Verbindung zwischen der Flotationsplatte 5 und dem Verbindungsglied 3 in radialer Richtung R und in Umfangsrichtung U hergestellt. Die zweite Öffnung 63 stellt einen Halteabschnitt der Nutstruktur 65 dar.

Die zweite Öffnung 63 ist mit einer Bohrung 73 versehen, welche sich in radialer Richtung R durch den Steg 59 erstreckt. Im montierten Zustand M fluchtet die Bohrung 73 bevorzugt mit der Bohrung 53 des Hakens 45, um ein Lagesicherungselement, wie einen Bolzen oder eine Schraube, in die Teile einzusetzen.

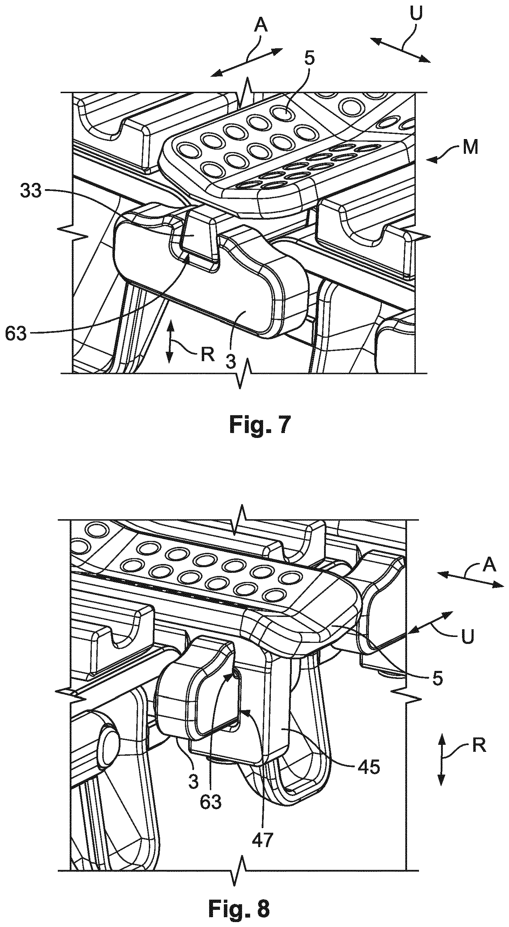

Die Verbindung der Flotationsplatte 5 mit zwei Verbindungsgliedern 3 ist in den Figuren 7 bis 9 im montierten Zustand M gezeigt. Dabei zeigt die Fig. 7 die Verbindung des ersten Endes 29 mit einem Verbindungsglied 3 eines Paares 23 und die Fig. 8 das zweite Ende 31 der Flotationsplatte 5 mit dem zweiten Verbindungsglied 3 des Paares 23.

Im montierten Zustand M ist der Vorsprung 33 des ersten Endes 29 formschlüssig in der hinterschnittenen zweiten Öffnung 63 des Verbindungsgliedes 3 gehalten.

Der trapezförmige Verbindungsabschnitt 43 des Vorsprungs 35 des zweiten Endes 31 ist in der hinterschnittenen zweiten Öffnung 63 des anderen Verbindungsgliedes 3 formschlüssig gehalten. Aus der beschriebenen Anordnung ergibt sich, dass die jeweils zweiten Öffnungen 63 der Verbindungsglied 3 in axialer Richtung A jeweils außenliegend angeordnet sind.

Durch die Anlage des Grundes 47 des Hakens 45 am Verbindungsglied 3 ist die Flotationsplatte 5 während der Montage gegen eine Verschiebung in Richtung des ersten Endes 29 gesichert. Dadurch kann eine Lage vorgegeben werden, in der die Flotationsplatte 5 am Verbindungsglied 3 fixiert werden kann.

Wenn der Grund 47 als Anschlag 49 am Verbindungsglied 3 anliegt, fluchten die beiden Bohrungen 53 und 73 miteinander. Zur Fixierung der Lage der Flotationsplatte 5 in Bezug auf das Verbindungsglied 3 ist im montierten Zustand M ein Lagesicherungselement 75 in beide Bohrungen 53 und 57 eingesetzt, sodass sich das Lagesicherungselement 75 durch die Flotationsplatte 5 und das Verbindungsglied 3 in radialer Richtung R erstreckt.

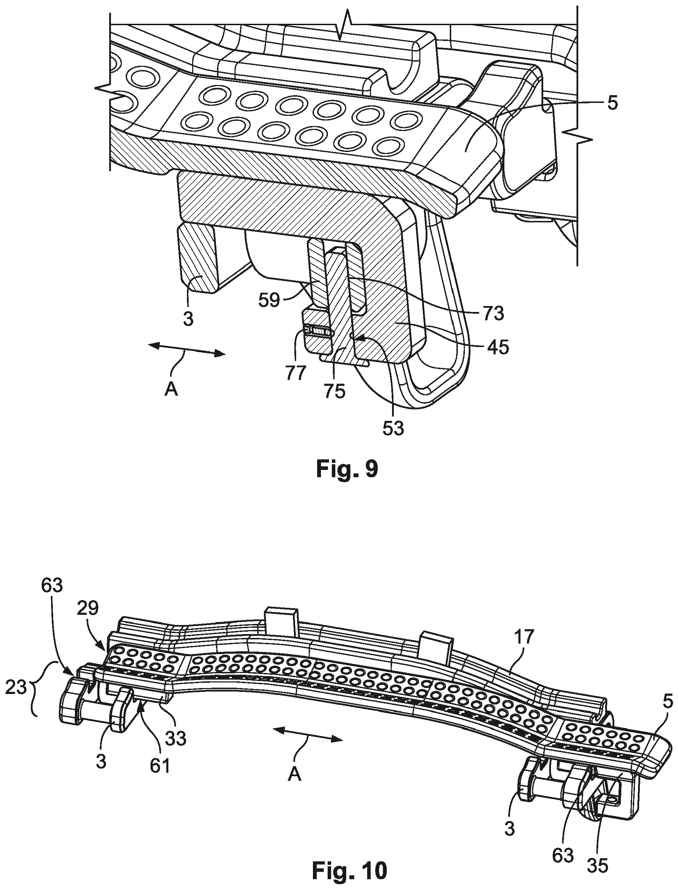

Der besseren Sichtbarkeit halber ist diese Situation auch in Fig. 9 in einer freigeschnittenen Darstellung gezeigt. Das Lagesicherungselement 75 erstreckt sich durch beide Bohrungen 53 und 73. Hierdurch ist die relative Lage der Flotationsplatte 5 zum Verbindungsglied 3 in axialer Richtung A gesichert. Das Lagesicherungselement 75, in diesem Fall ein Bolzen, kann zusätzlich durch ein weiteres Sicherungsbauteil 77 gegen Verlieren gesichert sein.

Im Folgenden ist ein Teil eines erfindungsgemäßen Plattenbandes 1 mit einer nicht vollständig eingesetzten Flotationsplatte 5 mit Bezug auf die Fig. 10 beschrieben.

Zur Verbindung mit dem übrigen Plattenband 1 wird die Flotationsplatte 5 auf die beiden Verbindungsglieder 3 des Paares von Verbindungsgliedern 23 aufgelegt. Dabei kommt der trapezförmige Vorsprung 33 des ersten Endes 29 auf der nicht hinterschnittenen ersten Öffnung 61 des einen Verbindungsgliedes 3 zu liegen. Am zweiten Ende 31 kommt der nicht trapez-förmige Einsetzabschnitt 41 am Grund der hinterschnittenen zweiten Öffnung 63 des anderen Verbindungsgliedes 3 zu liegen.

Anschließend wird die Flotationsplatte 5 in Richtung des ersten Endes 29 entlang der axialen Richtung A verschoben. Dabei gelangt der trapezförmige Vorsprung 33 des ersten Endes 29 in die hinterschnittene zweite Öffnung 63 des Verbindungsgliedes 3.

Am zweiten Ende 31 gelangt der trapezförmige Verbindungsabschnitt 43 in die hinterschnittene zweite Öffnung 63 des Verbindungsgliedes 3.

Die Flotationsplatte 5 wird so lange in axialer Richtung A verschoben, bis der Anschlag 49 am Verbindungsglied 3 anliegt und dadurch ein weiteres Verschieben verhindert. In diesem Zustand ist an jedem Verbindungsglied 3 ein trapezförmiger Abschnitt eines Vorsprungs in einer hinterschnittenen Öffnung 63 angeordnet. Die Flotationsplatte 5 ist daher in radialer Richtung R und in Umfangsrichtung U formschlüssig gehalten. Durch die zusätzliche Verwendung eines Lagesicherungselements 75 ist zudem eine Bewegung in axialer Richtung A verhindert. Die Flotationsplatte 5 ist dann sicher mit den Führungsketten 9 verbunden.

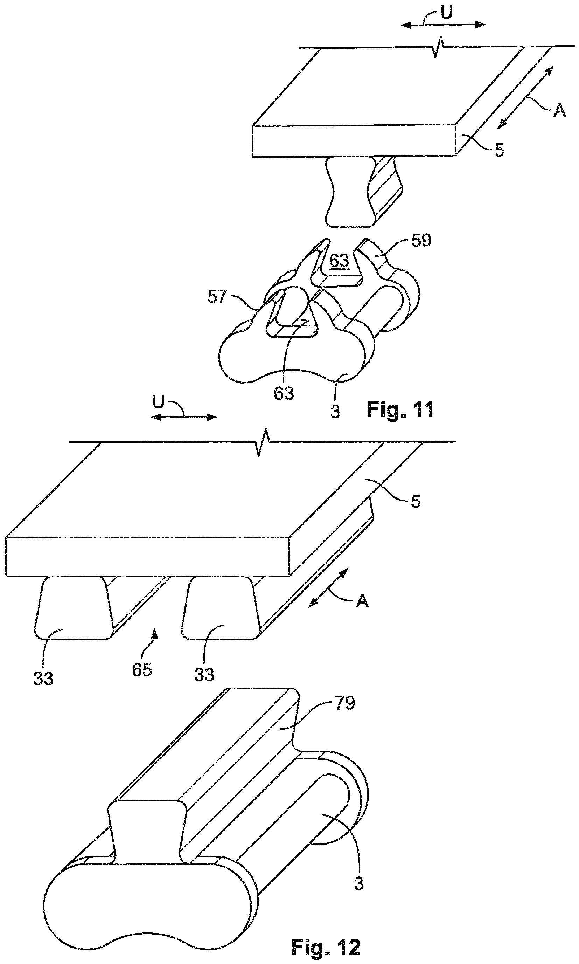

Im Folgenden ist kurz auf weitere mögliche Ausführungsformen der Verbindungsglieder 3 und der Flotationsplatten 5 eingegangen. Hierbei ist Bezug auf die Figuren 11 bis 15 genommen. Der Kürze halber ist jeweils lediglich auf die Unterschiede zu der zuvor beschriebenen Ausführungsform eingegangen.

Gemäß einer in Fig. 11 dargestellten Ausführungsform können beide Stege 57 und 59 des Verbindungsgliedes 3 mit einer hinterschnittenen Öffnung 63 versehen sein. Hierdurch können beide Stege 57 und 59 eine formschlüssige Verbindung zwischen Flotationsplatte 5 und Verbindungsglied 3 eingehen.

Fig. 12 zeigt eine weitere alternative Ausführungsform. Die Flotationsplatte 5 weist zwei in Umfangsrichtung U benachbarte Vorsprünge 33 auf, welche zwischen sich eine trapezförmig hinterschnittene Nutstruktur 65 öffnen. Das Verbindungsglied 3 ist mit einer komplementär dazu geformten Schiene 79 versehen, welche in die Nutstruktur 65 eingesetzt und von dieser formschlüssig gehalten werden kann.

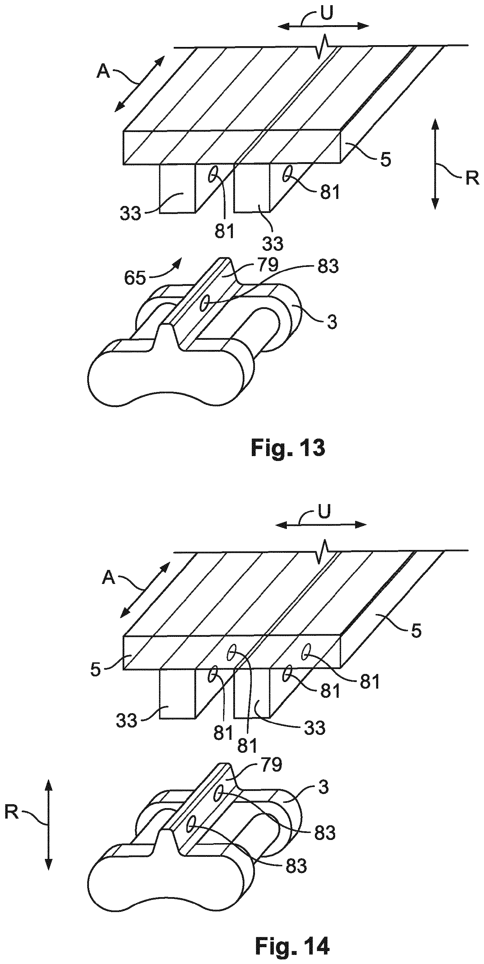

Die Figuren 13 und 14 zeigen jeweils schienenartige Verbindungen zwischen Flotationsplatte 5 und Verbindungsglied 3.

In beiden Beispielen ist die Flotationsplatte 5 mit jeweils zwei Vorsprüngen 33 versehen, welche eine Nutstruktur 65 zwischen sich bilden. Die Nutstruktur 65 ist jedoch nicht hinterschnitten. Eine Schiene 79 am Verbindungsglied 3 ist in radialer Richtung nach außen hin verjüngt, sodass die Verbindung mit der Flotationsplatte 5, also das Einsetzen in die Nutstruktur 65, erleichtert ist. Durch das Zusammenspiel von Schiene 79 und Nutstruktur 65 ist die Verschieblichkeit in axialer Richtung A gegeben.

Um die Position in axialer Richtung A zu sichern, können Lagesicherungselemente (nicht dargestellt) verwendet werden, welche sich in einem montierten Zustand M sowohl durch beide Vorsprünge 33 der Flotationsplatte 5 und durch die Schiene 79 am Verbindungsglied 3 hindurch erstrecken.

In dem in Fig. 13 gezeigten Beispiel ist ein Lagesicherungselement vorgesehen, sodass jeder Vorsprung 33 und die Schiene 79 mit je einer durchgängigen Bohrung 81 bzw. 83 versehen sind. Bei dem in Fig. 14 dargestellten Beispiel sind zwei Lagesicherungselemente vorgesehen, sodass jeder der Vorsprung 33 und auch die Schiene 79 mit je zwei Bohrungen 81 bzw. 83 versehen sind.

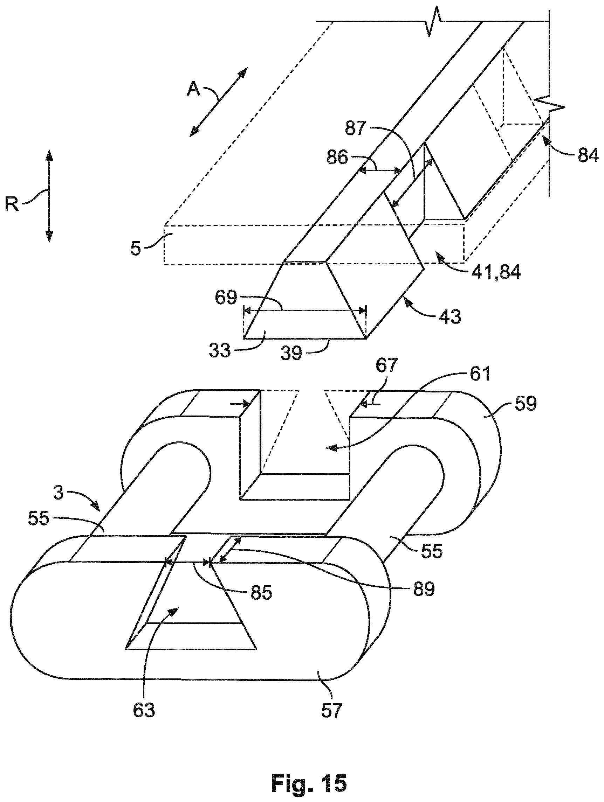

Das Verbindungsglied 3 der in Fig. 15 dargestellten Ausführungsform kann dem der ersten Ausführungsform ähneln und weist einen Steg 57 mit einer ersten Öffnung 61 und einen Steg 59 mit einer zweiten Öffnung 63 auf. Beide Öffnungen 61 und 63 erstrecken sich entlang der radialen Richtung R in den jeweiligen Steg hinein und fluchten in axialer Richtung A miteinander. Die Öffnungen 61 und 63 bilden zusammen eine Nutstruktur 65 zur Aufnahme eines Teils einer Flotationsplatte 5.

Die erste Öffnung 61 weist in radialer Richtung R einen konstanten Querschnitt auf oder ist nach außen hin geweitet, um die Verbindung mit der Flotationsplatte 5 zu erleichtern. Die erste Öffnung 61 stellt einen Einsetzabschnitt der Nutstruktur 65 dar. Die lichte Weite 67 der ersten Öffnung 61 ist vorzugsweise wenigstens so groß wie die Breite 69 des Vorsprungs 33 im Bereich des breiten Endes 39 eines trapezförmigen Querschnitts.

Der Vorsprung 33 weist eine Unterbrechung 84 des trapezförmigen Querschnitts auf, in dem der Vorsprung eine Breite 86 auf, die geringer ist als eine Öffnungsbreite 85 der zweiten Öffnung 63. Eine Länge 87 der Unterbrechung 84 ist bevorzugt nur geringfügig größer als eine Dicke 89 des Stegs 57, so dass der Vorsprung 33 an der Unterbrechung 84 in den Steg 57 eingesetzt werden kann. Bei einer anschließenden Verschiebung in axialer Richtung wird wieder ein Abschnitt des Vorsprungs 33 mit trapezförmigem Querschnitt in die zweite Öffnung 63 bewegt. Die Flotationsplatte 5 ist dann gegen Verkippen und Herauslösen aus dem Verbindungsglied 3 gesichert.

Bei dieser Ausführungsform, wie auch bei anderen Ausführungsformen, kann der Vorsprung 33 auch mit einer zweiten Unterbrechung 84 versehen sein. Dies ist rechts oben in der Fig. 15 gestrichelt dargestellt. In diesem Fall weist das Verbindungsglied 3 am Steg 59 ebenfalls eine hinterschnittene Öffnung 63 auf. Dies ist beim Verbindungsglied 3 der Fig. 15 gestrichelt angedeutet.

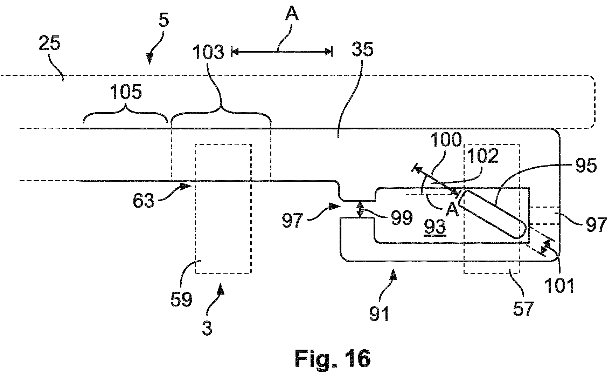

In Fig. 16 ist eine weitere mögliche Ausführungsform von Flotationsplatte 5 und Verbindungsglied 3 dargestellt. Die Flotationsplatte 5 und das Verbindungsglied 3 sind bei dieser Ausführungsform mit einer integrierten Verliersicherung 91 versehen. Diese Verliersicherung 91 dient zu verliersicheren Halterung der Flotationsplatte 5 am Verbindungsglied 3.

Die Verliersicherung 91 weist am Vorsprung 35 der Flotationsplatte 5 eine Aufnahme 93 für einen Halteabschnitt 95 des Stegs 57 des Verbindungsgliedes 3 auf. Die Aufnahme 93 ist nur durch einen Zugangsschlitz 97 zugänglich, dessen Weite 99 geringfügig größer als die Dicke 101 des Halteabschnitt 95 entspricht. Der Halteabschnitt 95 hat einen flachen, länglichen Querschnitt und verläuft mit einer Längsrichtung 100 zur axialen Richtung A geneigt, wobei ein Winkel 102 zwischen der Längsrichtung 100 und der axialen Richtung A vorzugsweise zwischen 20° und 70° beträgt.

Zur Verbindung der Flotationsplatte 5 mit dem Verbindungsglied 3 muss die Flotationsplatte 5 in Bezug auf das Verbindungsglied 3 gekippt und der Halteabschnitt 95 durch den Zugangsschlitz 97 geführt werden.

Anschließend kann die Flotationsplatte 5 wieder zurückgekippt und, wie bei den zuvor beschriebenen Ausführungsformen, entlang der axialen Richtung A verschoben werden. Um genügend Raum zur Verschiebung in der Aufnahme 93 bereitzustellen, weist diese eine längliche Form auf, die die Bewegung des Halteabschnitts 95 parallel zur axialen Richtung A durch die Aufnahme 93 erlaubt.

Die Verbindung der Flotationsplatte 5 durch Einschieben in eines der Verbindungsglieder 3 kann entweder am gegenüberliegenden Ende (nicht dargestellt) der Flotationsplatte 5 oder an dem Steg 59 des Verbindungsgliedes 3, an dem die Verliersicherung 91 angeordnet ist, erfolgen.

Im letzteren Fall kann der Steg 59 mit einer entsprechenden hinterschnittenen Öffnung 63 und der Vorsprung 35 mit einem komplementär zur Öffnung 63 geformten Abschnitt 103 versehen sein. Wenigstens ein in axialer Richtung A an den Abschnitt 103 in Richtung zum gegenüberliegenden Ende der Flotationsplatte 5 anschließende Abschnitt 105 kann so geformt sein, dass sich dieser ungehindert in die Öffnung 63 einsetzen lässt. Dieses Einsetzen erfolgt beim Verkippen der Flotationsplatte 5, also beim Einsetzen des Halteabschnitts 95 in die Aufnahme 93 durch den Zugangsschlitz 97.

Beim anschließenden Verschieben in der axialen Richtung A kann der Abschnitt 103 in die Öffnung 63 bewegt werden, sodass die Flotationsplatte 5 gegen Verkippen gesichert ist. Die Flotationsplatte 5 und/oder wenigstens eines der Verbindungsglieder 3 können auch bei dieser Ausführungsform anschließend gegen Verschieben gesichert werden. Beispielsweise können auch hier ein Lagesicherungselement 75 und entsprechende Bohrungen 73 (beides nicht dargestellt) verwendet werden.

Dadurch, dass die Flotationsplatte 5 gegen Verkippen gesichert ist, kann sie nicht so gekippt werden, dass der Halteabschnitt 95 die Aufnahme 93 durch den Zugangsschlitz 97 verlassen kann. Die Flotationsplatte 5 ist also verliersicher am Plattenband 1 gehalten.

Die Verliersicherung 91 kann entweder an einem fahrzeugseitigen Ende der Flotationsplatte 5 oder an dem gegenüberliegenden Ende angeordnet sein. Die Anordnung kann davon abhängig gemacht werden, an welcher Stelle die Flotationsplatte 5 beispielsweise durch ein Lagesicherungselement 75 mit dem Verbindungsglied 3 verbunden wird. Diese Sicherung erfolgt vorzugsweise an der fahrzeugabgewandten Seite der Flotationsplatte 5 um den Zugang durch eine Person zu erleichtern.

Der Zugangsschlitz 97 kann alternativ an der über die Aufnahme 93 gegenüberliegenden Seite angeordnet sein. Dadurch kann der Zugangsschlitz 97 die Aufnahme 93 an deren in axialer Richtung A außenliegendem Ende zugänglich machen. Der Zugangsschlitz 97 ist in Fig. 16 gestrichelt dargestellt. Bei einer solchen Ausführung kann der Halteabschnitt 95 alternativ auch an dem Steg 59 des Verbindungsgliedes 3 angeordnet sein. Dies ist jedoch nicht zwingend.

### Bezugszeichen

- 1: Plattenband
- 3: Verbindungsglied
- 5: Flotationsplatte
- 7: Fahrzeugreifen
- 9: seitliche Führungsketten
- 11: Reifenschultern
- 13: Laufflächen
- 15: radiale Vorsprünge
- 17: Traktionsstege
- 19: Kettenglieder
- 21: Stollen
- 23: Paar von Verbindungsgliedern
- 25: Körper
- 27: Oberfläche
- 29: erstes Ende
- 31: zweites Ende
- 33: Vorsprung
- 35: Vorsprung
- 37: Ende
- 39: Ende
- 41: Einsetzabschnitt
- 43: Verbindungsabschnitt
- 45: Haken
- 47: Grund
- 49: Anschlag
- 51: Weite
- 52: Abschnitt
- 53: Bohrung
- 54: Abschnitt
- 55: Verbindungsbolzen
- 57: Steg
- 59: Steg
- 61: erste Öffnung
- 63: zweite Öffnung
- 65: Nutstruktur
- 67: lichte Weite
- 69: Breite
- 71: Grund
- 73: Bohrung
- 75: Lagesicherungselement
- 77: Sicherungsbauteil
- 79: Schiene
- 81: Bohrung
- 83: Bohrung
- 84: Unterbrechung
- 85: Öffnungsbreite der zweiten Öffnung
- 86: Breite des Vorsprungs an der Unterbrechung
- 87: Länge der Unterbrechung
- 89: Dicke des Stegs
- 91: Verliersicherung
- 93: Aufnahme
- 95: Halteabschnitt
- 97: Zugangsschlitz
- 99: Weite
- 100: Längsrichtung
- 101: Dicke
- 102: Winkel
- 103: Abschnitt
- 105: Abschnitt

- A: axiale Richtung
- M: montierter Zustand
- R: radiale Richtung
- U: Umfangsrichtung

## Patentansprüche

1. Plattenband (1) für einen oder mehrere Fahrzeugreifen (7), wobei das Plattenband (1) zwei seitliche Führungsketten (9) aufweist, wobei jede Führungskette (9) wenigstens ein Verbindungsglied (3) aufweist und sich ein Paar (23) von Verbindungsgliedern (3), von denen jedes Verbindungsglied (3) Teil einer der Führungsketten (9) ist, in einer axialen Richtung (A) gegenüberliegt, und mit wenigstens einer austauschbaren Flotationsplatte (5), die sich in einem montierten Zustand (M) in der axialen Richtung (A) von dem einen zu dem anderen Verbindungsglied (3) erstreckt, **dadurch gekennzeichnet, dass** die wenigstens eine Flotationsplatte (5) auf die Verbindungsglieder (3) des Paares (23) geschoben ist, wobei die wenigstens eine Flotationsplatte (5) von wenigstens einem Verbindungsglied (3) des Paares (23) in der axialen Richtung (A) geführt und an wenigstens einem Verbindungsglied (3) des Paares (23) gegen Verschieben sicherbar ist.

2. Plattenband (1) nach Anspruch 1, **dadurch gekennzeichnet, dass** die Flotationsplatte (5) in einer radialen Richtung (R) und in einer Umfangsrichtung (U) des Plattenbandes (1) fixiert, aber parallel zur axialen Richtung (A) verschieblich an den zwei Verbindungsgliedern (3) eines Paares (23) gehalten ist.

3. Plattenband (1) nach Anspruch 1 oder 2, **dadurch gekennzeichnet, dass** die wenigstens eine Flotationsplatte (5) wenigstens einen Anschlag (49) zur Anlage an wenigstens einem Verbindungsglied (3) des mit der Flotationsplatte (5) verbundenen Paares (23) aufweist, wobei die Flotationsplatte (5) durch den Anschlag (49) gegen Verschieben in einer Richtung parallel zur axialen Richtung (A) gesichert ist.

4. Plattenband (1) nach Anspruch 3, **dadurch gekennzeichnet, dass** die Flotationsplatte (5) wenigstens einen Haken (45) aufweist, der das Verbindungsglied (3) im montierten Zustand (M) zumindest abschnittsweise umgreift, und dass der Anschlag (49) Teil des Hakens (45) ist.

5. Plattenband (1) nach einem der Ansprüche 1 bis 4, **dadurch gekennzeichnet, dass** die Flotationsplatte (5) im montierten Zustand (M) in wenigstens ein Verbindungsglied (3) des wenigstens einen Paares (23) eingeschoben ist.

6. Plattenband (1) nach einem der Ansprüche 1 bis 5, **dadurch gekennzeichnet, dass** das wenigstens eine Verbindungsglied (3) wenigstens eine Nutstruktur (65) aufweist, in die wenigstens ein Abschnitt (52, 54) der Flotationsplatte (5) eingeschoben ist.

7. Plattenband (1) nach Anspruch 6, **dadurch gekennzeichnet, dass** die Nutstruktur (65) schienenförmig ausgestaltet und ein komplementär zur Nutstruktur (65) geformter Abschnitt (52, 54) der Flotationsplatte (5) in die Nutstruktur (65) eingeschoben ist.

8. Plattenband (1) nach Anspruch 6 oder 7, **dadurch gekennzeichnet, dass** die Nutstruktur (65) zumindest abschnittsweise in einer radialen Richtung (R) nach außen geöffnet ist.

9. Plattenband (1) nach einem der Ansprüche 6 bis 8, **dadurch gekennzeichnet, dass** die Nutstruktur (65) zumindest abschnittsweise in einer radialen Richtung (R) hinterschnitten ist.

10. Plattenband (1) nach Anspruch 9, **dadurch gekennzeichnet, dass** die Nutstruktur (65) einen in radialer Richtung (R) hinterschnittenen Halteabschnitt (63) und einen in axialer Richtung mit dem Halteabschnitt (63) fluchtenden, nicht hinterschnittenen Einsetzabschnitt (61) zum Einsetzen wenigstens eines Abschnitts der Flotationsplatte (5) in die Nutstruktur (65) aufweist.

11. Plattenband (1) nach einem der Ansprüche 1 bis 10, **dadurch gekennzeichnet, dass** die wenigstens eine Flotationsplatte (5) wenigstens einen in einer radialen Richtung (R) nach innen vorspringenden Vorsprung (33, 35) aufweist.

12. Plattenband (1) nach einem der Ansprüche 1 bis 11, **dadurch gekennzeichnet, dass** das Plattenband (1) eine Mehrzahl von Traktionsstegen (17) aufweist, die sich in axialer Richtung (A) zwischen den Führungsketten (9) erstrecken und von denen zwei in einer Umfangsrichtung (U) aufeinanderfolgende Traktionsstege (17) durch je ein Paar (23) von Verbindungsgliedern (3) miteinander verbunden sind.

13. Verbindungsglied (3) für ein Plattenband (1), das nach einem der Ansprüche 1 bis 12 ausgestaltet ist.

14. Flotationsplatte (5) für ein Plattenband (1), das nach einem der Ansprüche 1 bis 12 ausgestaltet ist.

15. Bausatz für ein Plattenband (1) nach einem der Ansprüche 1 bis 12, umfassend eine Mehrzahl von Verbindungsgliedern (3) und eine Mehrzahl von Flotationsplatten (5).

## Claims

1. A plate track (1) for one or more vehicle tires (7), the plate track (1) comprising two lateral guide chains (9), each guide chain (9) comprising at least one connecting link (3) and a pair (23) of connecting links (3) facing each other in an axial direction (A), each connecting link (3) being part of one of the guide chains (9), and at least one exchangeable flotation plate (5) which in a mounted state (M) extends in the axial direction (A) from one connecting link (3) to the other connecting link, **characterized in that** the at least one flotation plate (5) is pushed onto the connecting links (3) of the pair (23), wherein the at least one flotation plate (5) is guided by at least one connecting link (3) of the pair (23) in the axial direction (A) and is securable to at least one connecting link (3) of the pair (23) against displacement.

2. The plate track (1) according to claim 1, **characterized in that** the flotation plate (5) is fixed in a radial direction (R) and in a circumferential direction (U) of the plate track (1), but is slidably held on the two connecting links (3) of a pair (23) parallel to the axial direction (A).

3. The plate track (1) according to claims 1 or 2, **characterized in that** the at least one flotation plate (5) comprises at least one stop (49) for abutment against at least one connecting link (3) of the pair (23) connected to said flotation plate (5), wherein said flotation plate (5) is secured by the stop (49) against displacement in a direction parallel to the axial direction (A).

4. The plate track (1) according to claim 3, **characterized in that** the flotation plate (5) includes at least one hook (45) which in the mounted state surrounds the connecting link (3) (M) at least in sections, and **in that** the stop (49) is part of the hook (45).

5. The plate track (1) according to one of claims 1 to 4, **characterized in that** the flotation plate (5) in the mounted state (M) is inserted into at least one connecting link (3) of the at least one pair (23).

6. The plate track (1) according to one of claims 1 to 5, **characterized in that** the at least one connecting link (3) includes at least one groove structure (65) into which at least one section (52, 54) of the flotation plate (5) is inserted.

7. The plate track (1) according to claim 6, **characterized in that** the groove structure (65) is rail-shaped and a section (52, 54) of the flotation plate (5) shaped complementary to the groove structure (65) is inserted into the groove structure (65).

8. The plate track (1) according to claim 6 or 7, **characterized in that** the groove structure (65) opens outwardly in a radial direction (R) at least in sections.

9. The plate track (1) according to claims 6 to 8, **characterized in that** the groove structure (65) is undercut in a radial direction (R) at least in sections.

10. The plate track (1) according to claim 9, **characterized in that** the groove structure (65) comprises a holding portion (63) having an undercut in the radial direction (R) and an insertion portion (61) without undercut aligned with the holding portion (63) in the axial direction for inserting at least a section of the flotation plate (5) into the groove structure (65).

11. The plate track (1) according to any one of claims 1 to 10, **characterized in that** the at least one flotation plate (5) includes at least one projection (33, 35) protruding inwardly in a radial direction (R).

12. The plate track (1) according to any one of claims 1 to 11, **characterized in that** the plate track (1) includes a plurality of traction webs (17) extending in the axial direction (A) between the guide chains (9) wherein two of the traction webs (17) succeeding each other in a circumferential direction (U) are connected to each other by a respective pair (23) of connecting links (3).

13. A connecting link (3) for a plate track (1) which is configured according to one of claims 1 to 12.

14. A flotation plate (5) for a plate track (1) which is configured according to one of claims 1 to 12.

15. A kit for a plate track (1) according to any one of claims 1 to 12, comprising a plurality of connecting links (3) and a plurality of flotation plates (5).

## Revendications

1. Bande à plaques (1) pour un ou plusieurs pneumatiques de véhicule (7), dans laquelle la bande à plaques (1) présente deux chaînes de guidage latérales (9), dans laquelle chaque chaîne de guidage (9) présente au moins un maillon de liaison (3) et une paire (23) de maillons de liaison (3), dont chaque maillon de liaison (3) fait partie de l'une des chaînes de guidage (9), est opposée dans une direction axiale (A), et avec au moins une plaque de flottaison (5) interchangeable qui s'étend dans un état monté (M) dans la direction axiale (A) de l'un à l'autre maillon de liaison (3), **caractérisée en ce que** la au moins une plaque de flottaison (5) est poussée sur les maillons de liaison (3) de la paire (23), dans laquelle la au moins une plaque de flottaison (5) est guidée par au moins un maillon de liaison (3) de la paire (23) dans la direction axiale (A) et peut être bloquée à l'encontre d'un déplacement sur au moins un maillon de liaison (3) de la paire (23).

2. Bande à plaques (1) selon la revendication 1, **caractérisée en ce que** la plaque de flottaison (5) est fixée dans une direction radiale (R) et dans une direction périphérique (U) de la bande à plaques (1), mais est maintenue de manière coulissante sur les deux maillons de liaison (3) d'une paire (23) parallèlement à la direction axiale (A).

3. Bande à plaques (1) selon la revendication 1 ou 2, **caractérisée en ce que** la au moins une plaque de flottaison (5) présente au moins une butée (49) pour un appui au niveau d'au moins un maillon de liaison (3) de la paire (23) reliée à la plaque de flottaison (5), la plaque de flottaison (5) étant bloquée par la butée (49) à l'encontre d'un déplacement dans une direction parallèle à la direction axiale (A).

4. Bande à plaques (1) selon la revendication 3, **caractérisée en ce que** la plaque de flottaison (5) présente au moins un crochet (45) qui entoure au moins par endroits le maillon de liaison (3) à l'état monté (M), et **en ce que** la butée (49) fait partie du crochet (45).

5. Bande à plaques (1) selon l'une quelconques des revendications 1 à 4, **caractérisée en ce que** la plaque de flottaison (5) est insérée dans au moins un maillon de liaison (3) de la au moins une paire (23) à l'état monté (M).

6. Bande à plaques (1) selon l'une quelconque des revendications 1 à 5, **caractérisée en ce que** le au moins un maillon de liaison (3) présente au moins une structure rainurée (65) dans laquelle au moins une section (52, 54) est insérée.

7. Bande à plaques (1) selon la revendication 6, **caractérisée en ce que** la structure rainures (65) est configurée en forme de rail et une section (52, 54) de la plaque de flottaison (5) formée en complément de la structure rainurée (65) est insérée dans la structure rainurée (65).

8. Bande à plaques (1) selon la revendication 6 ou 7, **caractérisée en ce que** la structure rainurée (65) est ouverte vers l'extérieur, au moins par endroits, dans une direction radiale (R).

9. Bande à plaques (1) selon l'une quelconque des revendications 1 à 8, **caractérisée en ce que** la structure rainurée (65) est orientée au moins par endroits le long d'un plan oblique (57).

10. Bande à plaques (1) selon la revendication 9, **caractérisée en ce que** la structure rainurée (65) présente une partie de retenue (63) en contre-dépouille dans la direction radiale (R) et une partie d'insertion (61) non en contre-dépouille, alignée dans la direction axiale avec la partie de retenue (63), pour insérer au moins une section de la plaque de flottaison (5) dans la structure rainurée (65).

11. Bande à plaques (1) selon l'une quelconque des revendications 1 à 10, **caractérisée en ce que** la au moins une plaque de flottaison (5) présente au moins une saillie (33, 35) faisant saillie vers l'intérieur dans une direction radiale (R).

12. Bande à plaques (1) selon l'une quelconque des revendications 1 à 11, **caractérisée en ce que** la bande à plaques (1) présente une pluralité de nervures de traction (17) qui s'étendent dans la direction axiale (A) entre les chaînes de guidage (9) et dont deux nervures de traction (17) consécutives dans une direction périphérique (U) sont reliées l'une à l'autre par une paire (23) de maillons de liaison (3).

13. Maillon de liaison (3) pour une bande à plaques (1) conçue selon l'une quelconque des revendications 1 à 12.

14. Plaque de flottaison (5) pour une bande à plaques (1) conçue selon l'une des revendications 1 à 12.

15. Kit de construction pour une bande à plaques (1) selon l'une quelconque des revendications 1 à 12, comprenant une pluralité de maillons de liaison (3) et une pluralité de plaques de flottaison (5).
